# EUROPEAN PATENT APPLICATION

(11) **EP 1 638 333 A1**
(43) Date of publication of application: **22.03.2006**
(21) Application number: 04255690.2
(22) Date of filing: 17.09.2004
(51) Int. Cl.: H04N 7/24, H04N 7/26

(54) **Rate adaptive video coding**

(71) Applicant: Mitsubishi Electric Information Technology Centre Europe B.V., Guildford, Surrey GU2 5YD (GB); MITSUBISHI DENKI KABUSHIKI KAISHA, Tokyo 100-8310 (JP)
(72) Inventor: Cieplinski, Leszek, GU1 2UF (GB); Ghanbari, Soroush, Guildford, Surrey GU1 1HS (GB); Bober, Miroslaw, Surrey GU1 2SE (GB)
(74) Representative: Whitlock, Holly Elizabeth Ann

(57) **Abstract**

A method of encoding a sequence of frames for transmission comprises encoding a sequence of frames under different conditions to produce a plurality of encoded bit streams each representing the sequence of frames, for transmission at different bit rates, and storing each of the encoded bit streams in a respective buffer, and outputting a bit stream from a buffer for transmission, and the method further comprises switching between buffers to change the bit rate of the data for transmission, wherein at least one frame to be stored in one buffer is encoded with reference to a frame stored in another buffer.

## Description

Bandwidth variation is one of the major problems in providing Quality of Service (QoS) guaranteed services over heterogeneous networks. One of the key requirements in video streaming is to adapt the transmission bit rate of the compressed video according to the network congestion condition, ("Optimal Dynamic Rate Shaping for Compressed Video Streaming", Minjung Kim and Yucel Altunbasak, ICN 2001,LNCS 2094, pp. 786-794). The bit rate of the encoded video data should dynamically scale up or down to cope with the variation of the channel rate. This can be achieved by controlling the compression parameters at the video encoder. However, for most codecs, the bit-rate of the encoded video data is determined during the encoding process and cannot be changed thereafter.

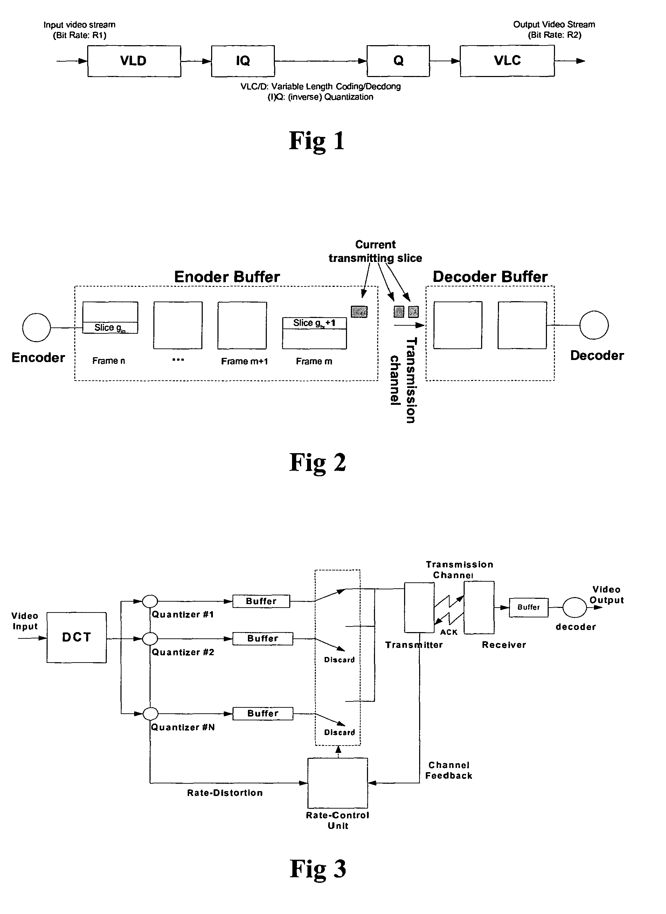

The most straightforward way to change the video bit rate to a new rate is by using a transcoder, ("Video Transcoding Architectures and Techniques: An Overview", Anthony Vetro, Charilaos Christopoulos, and Huifang sun, IEEE Signal Processing Magazine, march 2003). A transcoder first decodes and reconstructs the incoming video stream, and then re-encodes this reconstructed video stream at a different bit rate by using different quantisation parameters (see figure 1). The decoding and re-encoding process can be very time consuming and produces long delays for streaming compressed video.

In a transmission environment where encoded video data are packetized for transmission, the size of each encoded video slice (which is made of number of continuous blocks) is variable due to the variable bit rate nature of video compression. Therefore a compressed, slice data may be transported by several different packets. Consider the buffer content shown in figure 2. Assume that when the system is observed, slice (m, gₜₓ) of frame m is currently transmitted by the channel and slice (n, gᵢₙ) of frame n is the last slice, which is encoded and released to the encoder buffer. Therefore the buffer contains data from slice (m, gₜₓ+1) to slice (n, gᵢₙ) and part of slice (m, gₜₓ) bits data. Because of the constant end-to-end delay constraints imposed on the transport of video data, all the frames/slices inside the encoder buffer have to be transmitted by a specified time in order for the video to be decoded and displayed.

If the video stream is generated by an online (real time) encoder, then according to the network feedback, rate adaptation can be achieved on the fly by adjusting the encoder parameters such as quantizer step size, or in the extreme case by dropping frames, ("A performance study of adaptive video coding algorithms for high speed networks", S. Gupta, C.L. Williamson, Proceedings of Conference on Local Computer Networks (LCN' 95), October 95). To achieve this rate scalability for the encoded video data stream, a possible system implementation can consist of having video data quantized with different quantizers stored in separate buffers, and each buffer storing frame/slice quantized with one particular quantizer, ("Rate Control for Robust Video Transmission over Burst-Error Wireless Channels", Chi-Yuan Hsu, Antonio Ortega and Masoud Khansari, IEEE JOURNAL ON SELECTED AREAS IN COMMUNICATIONS, VOL. 17, NO. 5, MAY 1999). Then the video data currently being transmitted will be drawn from the appropriate buffer see fig 3.

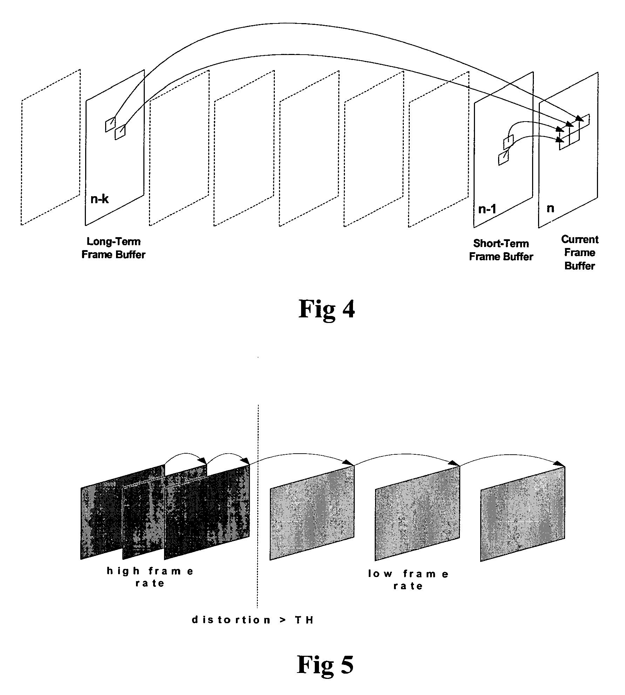

Another approach is to use a dual-frame buffer, ("Video Compression for Lossy Packet Networks with Mode Switching and a Dual-Frame Buffer", Athanasios Leontaris, and C. Cosman, IEEE Transactions on Image Processing, VOL. 13, No. 7, July 14). The basic use of the dual-frame buffer is as follows. While encoding frame n, the encoder and decoder both maintain two reference frames in memory. The short-term reference frame is frame n-1. The long-term reference frame is, say, frame n-k, where k may be variable, but is always greater than 1. Each macro-block (MB) can be encoded in one of the three coding modes: intra coding, inter coding using the short-term buffer (inter-ST-coding), and inter-coding using long-term buffer (inter-LT-coding). This is illustrated in figure 4. The only modification that is needed to the codec is that a single bit will be sent to indicate use of the short term or long-term frame. This method can be used to switch the bit-rate by skipping frames and using the long-term frame as the predictor to code the next frame when the bit-rate needs to be dropped, ("Dual frame motion compensation for a rate switching network", Vijay Chellappa, Pamela C. Cosman and Geoffrey M. Voelker, In Proceedings of IEEE Data Compression Conference (DCC'2003); WO 2004/064373 A2: "Video Encoding Methods and Devices", University of California, 29/07/004).

An alternative method to minimize the effect of the channel bandwidth change is to control the encoding frame interval, ("Real-time Encoding Frame Rate Control for H.263+ Video over the Internet", H. Song, J. Kim, and C.-C. Jay Kuo, Signal Processing: Image Communication, vol. 15, Sept. 1999). If the spatial quality is below a tolerable level due to fast motion change or sudden channel bandwidth decrease, the temporal quality should be reduced to improve the spatial quality in order to reduce the flickering artefact. At the same time, it is still desirable to control the temporal quality degradation. On the contrary, if the spatial quality is above a certain level, the temporal should be increased. Based on this discussion the encoding frame rate control algorithm can be stated as follows: If distortion > threshold, increase the frame rate interval, otherwise decrease the frame rate interval (see figure 5).

US 5485211 and US 5416520 relate to a method and apparatus using multiple encoder output buffers and differential coding with reference to a transmit reference image. The output buffer having the best information is used for transmission and then for creating a new transmit reference image.

In streaming video applications, the server may provide multiple copies of the same video sequence and several bit-rates. The server then dynamically switches between the bit-streams, according to the network congestion or the bandwidth available to the client. There are some issues with such bit-stream switching that must be considered. When the available channel bandwidth drops, clients have to switch from one higher-rate bit-stream to another lower-rate one (a "switching-down" process), and vice versa. Both the switching-up (from a lower-rate to a higher-rate) and switching-down (from a high-rate to a lower-rate) processes will introduce drifting errors. This is because the prediction frame (e.g. P-picture) in one bit-stream is different from the other and will cause picture drift when switching.

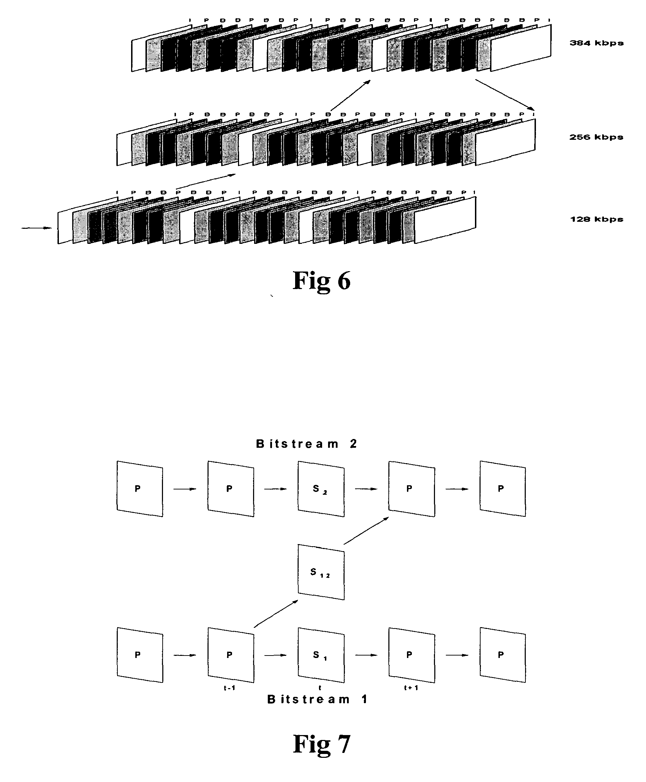

In current video encoding standards, perfect (mismatch-free) switching between bit-streams is possible only at positions where the future frames/regions does not use any information previous to current switching locations i.e. I-frames, ("Adaptive Video Streaming: Pre-encoded MPEG-4 with Bandwidth Scaling", A. Balk, M. Gerla and M. Sanadidi, International Journal of Computer and Telecommunications Networking, Volume 44, Issue 4, March 2004) (see figure 6). It is however, well known that I-frames require many more bits than the motion-compensated predicted frames.

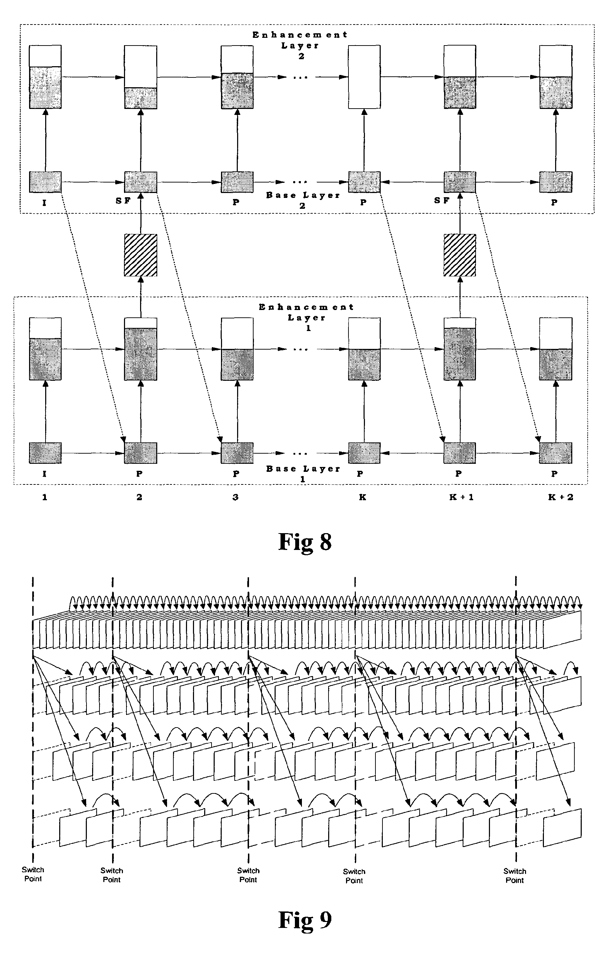

To rectify picture drift in bit-stream switching, a switching picture (SP) is used to switch from one bit-stream to another, ("MPEG-4 Video Streaming with Drift-Compensated Bit-Stream Switching" Yeh-Kai Chou, Li-Chau Jian, and Chia-Wen Lin, Proceedings of the Third IEEE Pacific Rim Conference on Multimedia: Advances in Multimedia Information Processing, December 16 - 18, 2002; "The SP- and SI-Frames Design for H.264/AVC", Marta Karczwicz and Ragip Kurceren, IEEE Transactions on Circuits and Systems for Video Technology, VOL. 13, NO. 7, July 2003; and WO 02/054776 A1: "Switching between bit-streams in video transmission", NOKIA CORP. 03/01/2002). An example of how to utilise SP frames is illustrated in figure 7. Let us assume that there are 2 bit-streams corresponding to the same sequence encoded at different bit-rates. Within each encoded bit-stream, SP-pictures should be placed at the locations at which one wants to allow switching from one bit-stream to another (pictures S1 and S2 in figure 7). When switching from bit-stream 1 to bit-stream 2, another SP-picture will be transmitted (picture S12 in figure 8).

Another approach is to compress a video sequence, into a single scalable bit-stream, which can be truncated to adapt to bandwidth variations. Scalable video coding consists of forming the output stream from a number of layers of different bit rates, frame rates and possibly resolutions to achieve a scaleable output. The resulting video layers consist of one base layer (BL) and a number of enhancement layers (EL), all of which have different contributions to decoded video quality. The enhancement layers help to improve the perceptual quality but their absence causes a graceful deterioration of the received video quality. The enhancement layers could then be used as a trade-off between quality and compression efficiency in order to control the output bit rate of the video coder.

The number of available layers in scalable coding is limited. Hence, a switching framework can be applied to significantly improve the efficiency of scalable video coding over a broad bit rate range using multiple scalable bitstreams, (EP 1 331 822 A2: "Seamless switching of scalable video bit-streams", MICROSOFT CORP. 14/01/2003). Each scalable bitstream has a base layer with different bit rate and can best adapt to channel bandwidth variation within a certain bit rate range. If the channel bandwidth is out of range, the scalable bitstream can be switched from one to another with better coding efficiency (see figure 8).

The main problem facing the video codec when the available transmission bandwidth suddenly changes is how to adapt to the new conditions with minimal delay and without loss of quality. An additional complication is the fact that, usually, a number of encoded frames/slices are stored in the encoder buffer waiting to be transmitted. When the bitrate changes, there are still some frames/slices inside the buffer that were encoded at the old bitrate. If the bitrate is reduced, transmitting these old frames/slices would cause an additional delay in adjusting the bitrate and therefore have a highly negative impact on decoding delay and quality.

The techniques described above are not suitable for dealing with such sudden bitrate changes. Insertion of I frames does not solve the problem of video delay as I frames carry many more bits than predictive frames. Video coded at different bit-rates, is usually coded at different frame rates. Hence using multiple buffers with different quantiser step sizes will not solve the problem when the frame rate needs to be changed as all the buffers contain the same frame rate. Using Long-term frames as a predictor when bit-rate needs to be changed can lead to picture drift if too many frames are still queued in the sending buffer.

Multiple buffers with different bit-rates and different frame-rates used for sending data at discrete times use only one reference frame from the sending buffer to start coding data for the other buffers with different bit-rates and frame-rates. If the compressed data is sent continuously, then this technique would need to store many frames at the decoder to be able to decode the frames after the bit-rate is changed.

When using switching pictures (SP-pictures) the bit rate can only be changed at switching picture positions and hence the bit-rate cannot be suddenly changed. SP-pictures use multiple bitstreams to switch between bitrate. Also with SP-pictures at the switch point the prediction used is the previous picture and no long-term prediction is used, hence all the frames within the buffer will have to be flushed before the new bit-rate frames are transmitted leading to longer delay.

There are also some drawbacks to scalable video coding. The overall bit rate of a multilayer encoder can be much larger than a single layer one due to extra syntax overhead. Second, the number of available layers is limited in scalable coding, which limits the user choice. Third, scalable coding introduces extra computation at the decoder side, which is undesirable for user terminals with limited computational resources.

Aspects of the invention are set out in the accompanying claims.

According to a first aspect, the invention provides a method of encoding a sequence of frames for transmission comprising encoding a sequence of frames under different conditions to produce a plurality of encoded bit streams each representing the sequence of frames, for transmission at different bit rates, and storing each of the encoded bit streams in a respective buffer, and outputting a bit stream from a buffer for transmission, the method further comprising switching between buffers to change the bit rate of the data for transmission, characterised in that at least one frame to be stored in one buffer is encoded with reference to a frame stored in another buffer.

More specifically, when a buffer is being used for transmission, frames for other buffers are encoded with reference to frames in the transmitting buffer. The reference frames precede the frames being encoded in time, so that if transmission is switched to a new buffer, then the reference frame will already have been completely sent and thus will be available for reconstruction.

According to another aspect, the invention provides a method of encoding a sequence of frames for transmission, using a plurality of buffers storing data for transmission at different bit rates, the method further comprising switching between buffers to change the bit rate of the data for transmission, wherein when data is transmitted from a first buffer then data to be stored in the first buffer is encoded with reference to a frame previously encoded and stored in said buffer, and data to be stored in another buffer is also encoded with reference to a frame previously encoded and stored in said first buffer, and when transmission is switched to a second buffer, then data to be stored in said second buffer is encoded with reference to a frame previously encoded and stored in said second buffer, and data to be stored in another buffer is also encoded with reference to a frame previously encoded and stored in said second buffer.

According to another aspect, the invention provides a method of encoding a sequence of frames for transmission, using a plurality of buffers storing data for transmission at different bit rates, the method comprising switching between buffers to change the bit rate of the data for transmission, wherein frames for said one buffer are encoded with reference to a frame for a buffer having the closest bit rate.

Some features of an embodiment of the invention are set out below.

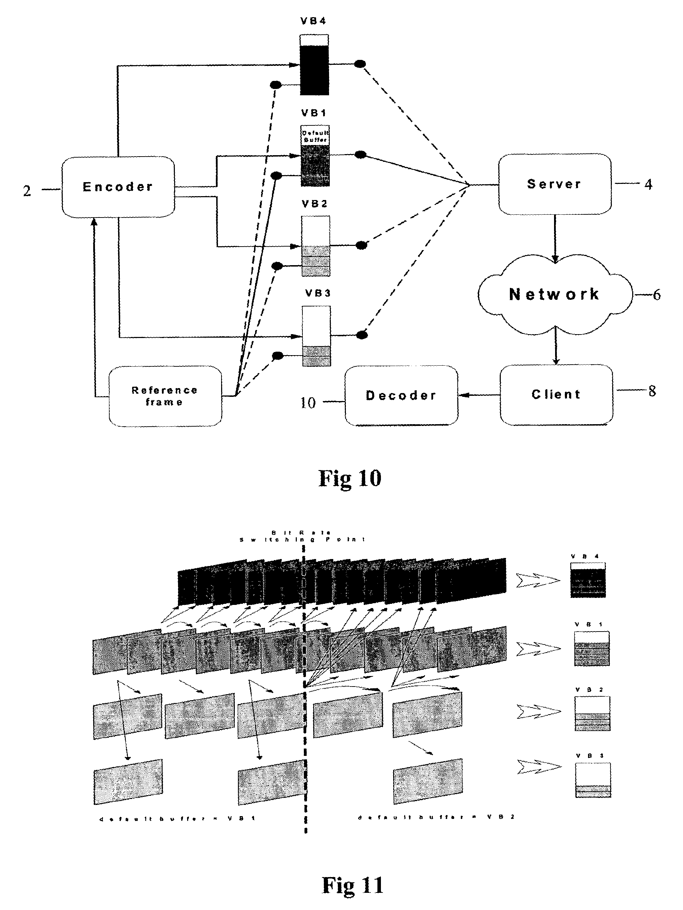

A single video codec is used to compress an input video sequence and the compressed data is stored in a buffer at a pre-set bit rate r₁ at a default frame rate of f₁. This default buffer (VB1) is used to queue the compressed data before it is transmitted to the user/client (see figure 10). While encoding VB1, other virtual buffers (VB2, VB3, etc.) are encoded with different bit-rates and frame-rates. The frames within the non-default virtual buffers correspond to some of the frames in VB1 but with different quality. The encoded frames in VB1 are compressed with reference to the previous encoded frame within this buffer. In the case of other buffers, each frame is encoded with reference to a frame from VB1 rather than a previous frame from the same buffer. The non-default buffers (VB2, VB3, etc.) may have different frame-rates (f₂, f₃, etc.) because their bit-rates (r₂, r₃, etc.) are different. The reason for these extra buffers is to allow a sudden switch of bit-rate. When the bit-rate is switched, there are still some frames/slices inside VB 1 from the old bit-rate r₁ that cannot be transmitted. Transmitting these remaining frames would either increase video delay in the case of switching to a lower bit rate or fail to immediately improve picture quality when switching to a higher bit rate. To solve this problem we switch to transmitting some already coded frames from the non-default buffer with the new bit-rate, rather than the remaining frames from VB1. This non-default buffer (e.g. VB2) becomes the new default buffer and compressed data is transmitted from this buffer to the client. The other VBs including the old default buffer VB 1 now compress their frames with reference to the new default buffer (VB2).

Embodiments of the invention will be described with reference to the accompanying drawings of which:
Fig. 1 is a block diagram of prior art codec;
Fig. 2 is a block diagram of a prior art codec and transmission system;
Fig. 3 is a block diagram of a prior art encoder having multiple quantizers and buffers;
Fig. 4 illustrates a prior art method of encoding frames;
Fig. 5 illustrates another prior art method of encoding frames;
Fig. 6 illustrates a prior art method of encoding frames at different bit rates;
Fig. 7 illustrates a prior art method of encoding frames using a switching picture;
Fig. 8 illustrates a prior art method of encoding frames using scalable encoding;
Fig. 9 illustrates a method of encoding frames of an embodiment of the invention;
Fig. 10 is a block diagram of a system of an embodiment of the present invention;
Fig. 11 illustrates a method of an embodiment of the invention;
Fig. 12 illustrates a method of an embodiment of the invention;
Fig. 13 illustrates a method of an embodiment of the invention;
Fig. 14 illustrates a method of an embodiment of the invention;
Fig. 15 illustrates a method of an embodiment of the invention;
Fig. 16 illustrates a method of an embodiment of the invention;
Fig. 17 illustrates a method of an embodiment of the invention;
Fig. 18 illustrates a method of an embodiment of the invention;
Fig. 19 illustrates a method of an embodiment of the invention; and
Fig. 20 illustrates a method of an embodiment of the invention.

A system according to an embodiment of the invention is shown in Fig. 10. The system includes an encoder 2 and four virtual buffers (any number of virtual buffers greater than 1 can be used), a server 4, a network 6, a client 8, and a decoder 10.

Using a standard video codec (e.g. MPEG-4/H.264) a video sequence is compressed with an initial target bit-rate (BR1) and stored in a virtual buffer (VB1). At the same time of filling VB1, other VBs (e.g. VB2, VB3, etc.) are used to store compressed video data at lower/higher bit-rate to BR1. These extra virtual buffers compress video data with reference to the content of VB 1. At the point of bit-rate switch one of the other VBs (e.g. VB2, whereBR2 < BR1) is used to provide the remaining compressed video data at the switched bit-rate (BRS). Since VB2 is the new default buffer after the switching point, the other buffers (VB4, VB1, VB3, see figure 11) will compress their frames with reference to frames encoded within VB2.

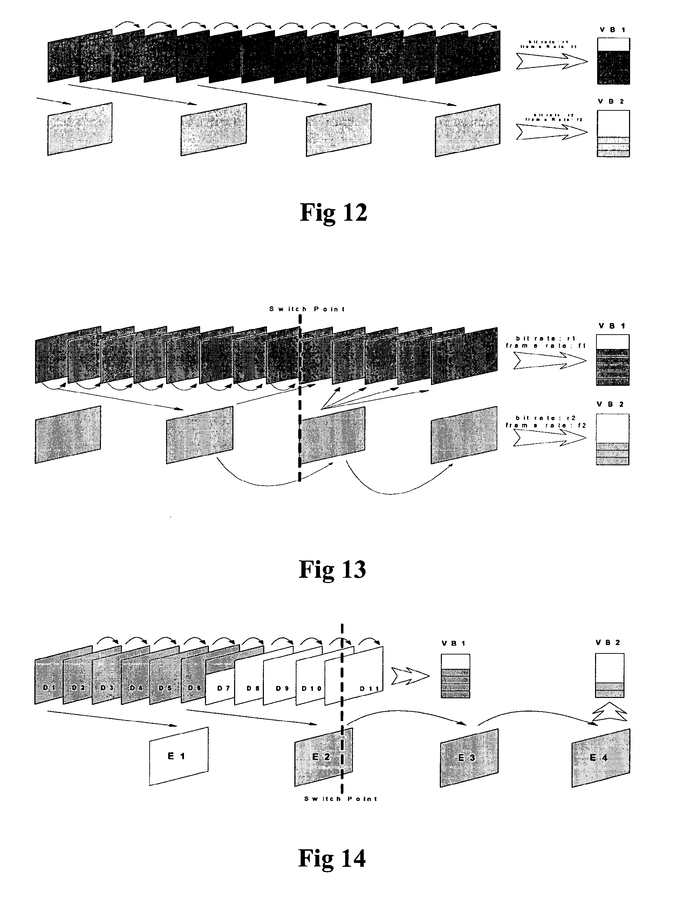

Generally in video coding, video is compressed at high frame rates (e.g. 25/30 fps) for high bit rates and low frames rates (e.g. 5/10 fps) for low bit rates. As depicted in figure 12, VB1 is coded at a higher frame rate (f1) than the frame rate (f2) of VB2, as its bit rate (r1) is larger than the VB2 bit rate (r2).

The situation in figure 13 depicts only two different bit rates and one switching event. Before the "switch point" VB 1 is the default buffer, and therefore all frames before the switch point are encoded in reference to a previous frame in VB1. Since f2<fl, the reference frames used to encode frames for VB2 are further back in time than reference frames used for coding frames in VB 1. For example if f2 = 25 fps and f1 = 5 fps, then for every five frames encoded in VB1 one frame is encoded for VB2. At the "switch point" VB2 becomes the default buffer. From this point onwards any frame that is encoded refers to a previous frame in VB2. VB 1 frames are still encoded to get ready for a situation when the bandwidth increases and the bit rate can be switched from r2 back to r1.

As depicted in figure 9, four buffers with different bit-rates are created. For high bandwidth, the video can be coded at high frame-rates and for low bandwidth low frame-rates are used to code the video. As depicted in figure 6, at the switch points each buffer uses the same reference frame to code a frame. Then each frame is coded from its previous coded frame within its buffer.

When the switch point occurs, there are still some frames within the default buffer that are queuing to be sent to the client. These frames cannot be sent, because the bit rate has now changed and bits within these frames no longer represent the correct bit rate. For example: in figure 14, at the switch point, frames D1-D6 and part of D7 have been transmitted and frames D8-D11 and the remaining parts of frame D7 are queued in VB1. Also, VB2 contains frames E1 and E2. Instead of sending the rest of D7 and frames D8-D11, just E2 is sent. Frame E1 has the same time stamp as frame D5 and because the decoder has received frame D6, E1 is not required at the decoder. At the decoder when decoding all the bits received from frame D6, the frame header (picture start code) of frame E2 is decoded, as D7 could not have been fully decoded, then frame D7 will not be displayed at the decoder. Frame D7 is not needed as E2 is decoded with reference to frame D6.

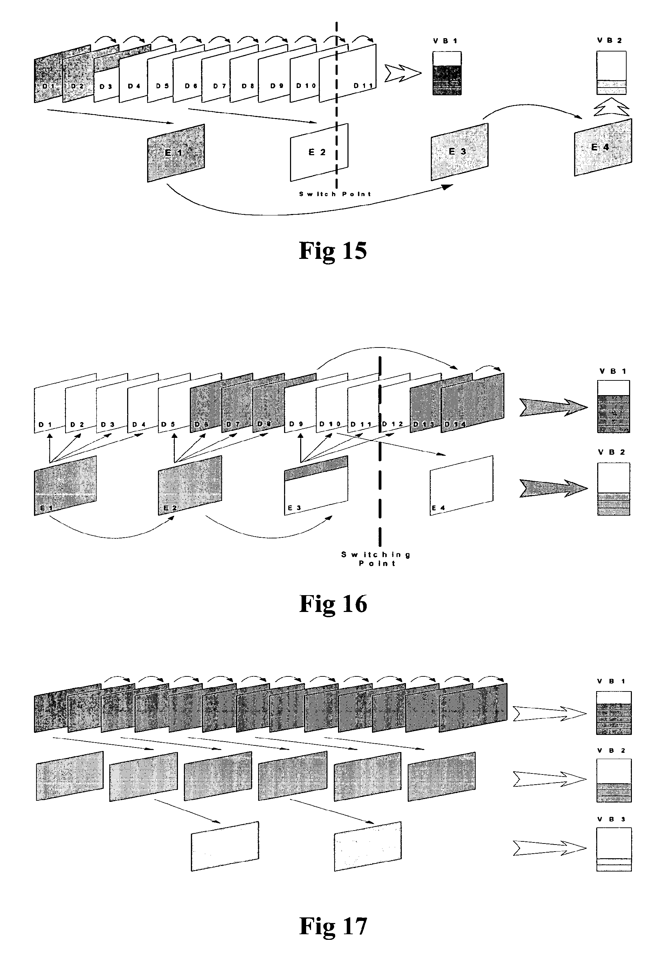

If at the switch point, only frames D1-D2 and part of frame D3 were sent (see figure 15), E1 would be sent rather than E2. After the switch point, frame E3 is encoded with reference to the previously sent frame E1 (or E2 in the previous example). The next frame sent E4 is simply encoded with reference to E3.

To switch back from a low bit rate to a high bit rate to improve picture quality and utilise the bandwidth available, frames at high bit rate and frame rate are stored in the non-default virtual buffer (see figure 16: VB1, before the switch point). At the "switching point", frames E1 and E2 from VB2 have been transmitted and frame E3 has been encoded but not yet completely sent. At the switching point the transmission of E3 is cancelled. Frames D1-D 12 are already coded and stored in the high bit rate buffer VB1. Since frame D5 has the same time stamp as frame E2 and only parts of frame E3 is sent then only frames D6-D8 can be sent to the client. This is because frames D9-D12 will not have the correct reference frame in the decoder if they were sent. After the switch point the next frame D 13 will be encoded with reference to the previous sent frame D8 and after that each frame will be encoded with reference to the relevant previous frame in VB 1.

Previously when using multiple buffers, each encoded frame within the non-default buffers (e.g. VB2, VB3 etc.) was compressed with reference to frames from the default buffer (VB1). As shown in figure 17, in this algorithm each frame is compressed with reference to a frame from a buffer with the closest bit rate. For example: the bit rate of VB3 is closer to VB2 than VB 1, hence the frames encoded for VB3 are compressed with reference to frames from VB2 instead of the default buffer VB1.

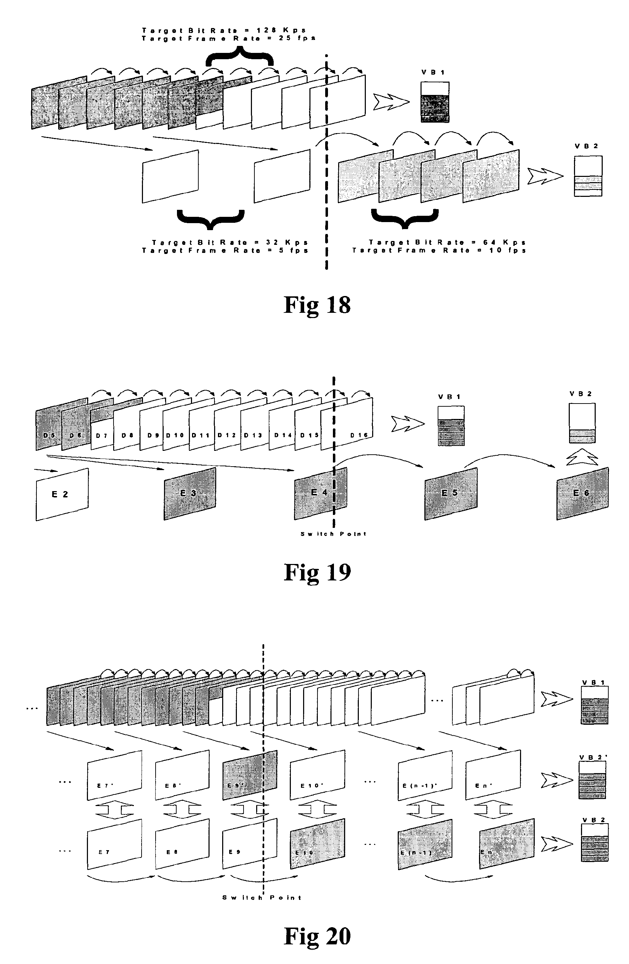

The network bandwidth can vary; hence many virtual buffers would be needed to accommodate the available range of bit rates. To reduce the number of buffers used after the bit rate switch the bit rate can be further changed to utilise the available bandwidth. As shown in figure 19, before switching occurs the bit rate of the default buffer is 128 Kbps with a frame rate of 25 fps. A non-default buffer VB2 encodes at 32 kbps with a frame rate of 5 fps ready for transmission at the switch point. However if the bandwidth only drops to 64 kbps, after switching any further encoding will be created at this new bit rate of 64 kbps instead of 32 kbps. The frame rate can also be adjusted to suit the bandwidth, for example, the frame rate in figure 15 for VB2 is increased from 5 fps to 10 fps.

To further reduce jitter when reducing the bit-rate, more than one frame in the non-default low bit-rate buffer (i.e. see figure 19: VB2) can be predicted from one frame from the default high bit-rate buffer VB1. As depicted in figure 18, frames E3 and E4 from VB2 are predicted from only frame D5 in VB1. At the point of switch, since the frames D5-D6 have been completely transmitted, then frames E3 and E4 from VB2 can be transmitted before encoding frames E5 and E6. This will reduce the jitter as more than one pre-encoded frame from VB2 will be transmitted at the switch point.

The algorithms used in the previous examples can only be used for live streaming. However a similar technique can be used for pre-encoded streaming with the use of additional buffers. For example when switching down from a high bit rate to a low bit rate, three bit-streams will have to be created as shown in figure 20. These bit-streams come from buffers VB1, VB2' and VB2. VB1 stores high bit rate bit-streams and VB2' and VB2 store low bit rate bit-streams. The frames stored in VB2' and VB2 have the same time stamp with the same encoding rate (same bit-rate and frame-rate) but their frames are encoded from a different encoded reference frame. The frames from VB2' are coded with reference to a previous frame in VB1 and the frames from VB2 are coded from a previous encoded frame within its own buffer (VB2). As illustrated in figure 18, at the "Switch point", the encoded frame E9' from VB2' is sent first then the following frames from VB2 (E10, E11, etc.) are sent to the client.

The decoder stores two frames in memory. One frame is used as reference to decode the next received frame. The second is only used at the switch point to decode the first transmitted switched frame.

In this specification, the term "frame" is used to describe an image unit, including after filtering, but the term also applies to other similar terminology such as image, field, picture, or sub-units or regions of an image, frame etc. The terms pixels and blocks or groups of pixels may be used interchangeably where appropriate. In the specification, the term image means a whole image or a region of an image, except where apparent from the context. Similarly, a region of an image can mean the whole image. An image includes a frame or a field, and relates to a still image or an image in a sequence of images such as a film or video, or in a related group of images.

An image may be a grayscale or colour image, or another type of multi-spectral image, for example, IR, UV or other electromagnetic image, or an acoustic image etc.

The invention can be implemented for example in a computer system, with suitable software and/or hardware modifications. For example, the invention can be implemented using a computer or similar having control or processing means such as a processor or control device, data storage means, including image storage means, such as memory, magnetic storage, CD, DVD etc, data output means such as a display or monitor or printer, data input means such as a keyboard, and image input means such as a scanner, or any combination of such components together with additional components. Aspects of the invention can be provided in software and/or hardware form, or in an application-specific apparatus or application-specific modules can be provided, such as chips. Components of a system in an apparatus according to an embodiment of the invention may be provided remotely from other components, for example, over the internet. A coder is shown in Fig.6 and a corresponding decoder has, for example, corresponding components for performing the inverse decoding operations.

## Claims

1. A method of encoding a sequence of video frames for transmission comprising encoding a sequence of frames under different conditions to produce a plurality of encoded bit streams each representing the sequence of frames, for transmission at different bit rates, and storing each of the encoded bit streams in a respective buffer, and outputting a bit stream from a buffer for transmission, the method further comprising switching between buffers to change the bit rate of the data for transmission, **characterised in that** at least one frame to be stored in one buffer is encoded with reference to a frame stored in another buffer.

2. The method of claim 1 wherein each frame to be stored in said one buffer is encoded with reference to a frame stored in another buffer.

3. The method of any preceding claim wherein a frame is encoded with reference to a frame stored in another buffer while said another buffer is used for transmission.

4. The method of any preceding claim wherein frames for said one buffer are encoded with reference to a frame for the buffer that stores video data compressed at the closest bit rate to the bit rate of the compressed video data stored in said one buffer chosen from the buffers with video data compressed at bit rate closer to the bit rate of the compressed video data stored in the buffer being used for transmission than to the bitrate of the compressed video data stored in the said one buffer.

5. The method of any preceding claim wherein when data is transmitted from a first buffer then frames to be stored in the first buffer are encoded with reference to a frame previously encoded and stored in said buffer, and frames to be stored in another buffer are also encoded with reference to a frame previously encoded and stored in said first buffer, and when transmission is switched to a second buffer, then frames to be stored in said second buffer are encoded with reference to a frame previously encoded and stored in said second buffer, and frames to be stored in another buffer are also encoded with reference to a frame previously encoded and stored in said second buffer.

6. The method of any preceding claim wherein more than one frame for a buffer is encoded with reference to the same frame for another buffer.

7. The method of any preceding claim wherein different frames for a buffer are encoded with reference to different frames for another buffer.

8. The method of any preceding claim comprising encoding frames to be stored in different buffers with reference to different frames in different buffers.

9. The method of any preceding claim wherein frames are encoded with reference to frames for the buffer which is the transmitting buffer.

10. The method of any preceding claim wherein the sequence of frames is encoded to produce different bit streams at different bit rates by using different spatial resolution and/or different temporal resolution and/or different picture quality.

11. The method of claim 10 wherein the sequence of frames is encoded at a plurality of different frame rates.

12. The method of any preceding claim further comprising changing the bit rate within an encoded bit stream and for a respective buffer.

13. The method of claim 12 comprising changing the frame rate to achieve the different bit rate.

14. The method of any of claims 10 to 13 wherein the bit rate change is after a switching point.

15. An encoded bit stream representing a sequence of images derived using the method of any preceding claim.

16. A method of decoding an image or sequence of images encoded using the method of any of claims 1 to 14.

17. The method of claim 16 comprising reconstructing data received at a first bit rate with reference to data received at a second bit rate.

18. Use including, for example, transmission or reception of data encoded using a method of any of claims 1 to 14.

19. A method of transmitting data representing a sequence of frames encoded using a method of any of claims 1 to 14 comprising switching transmission from a first buffer to a second buffer depending on a change of conditions such as appropriate bit rate, wherein frame data transmitted from a second buffer is already encoded with reference to frame data sent from the first buffer.

20. A coding and/or decoding apparatus for executing a method of any of claims 1 to 14, 16 or 17.

21. A computer program, system or computer-readable storage medium for executing a method of any of claims 1 to 14, 16, 17 or 19.
